Europäisches Patentamt

European Patent Office

Office européen des brevets

(11) Publication number: **0 288 914 B1**

## EUROPEAN PATENT SPECIFICATION

(45) Date of publication of patent specification: **29.01.92**  (51) Int. Cl.⁵: **B65G  67/02**, B65G 63/02

(21) Application number: **88106434.9**

(22) Date of filing: **22.04.88**

(54) **Method and assembly for container loading and unloading.**

(30) Priority: **27.04.87 US 42815**
**15.03.88 US 168407**

(43) Date of publication of application:
**02.11.88 Bulletin  88/44**

(45) Publication of the grant of the patent:
**29.01.92 Bulletin  92/05**

(84) Designated Contracting States:
**BE DE ES FR GB GR IT NL SE**

(56) References cited:
**DE-A- 2 840 214**
**US-A- 3 958 701**

**Bulletin d'Informations de la SICOS; "Pour
une meilleure circulation", no. 28 (FR, juillet
1982), page 4**

(73) Proprietor: **ADMIRALTY GROUP LTD.**
**1 Long Pier**
**New London Connecticut 06320(US)**

(72) Inventor: **Harp, James J.**
**4701 Pontiac Drive**
**Annandale, Virginia 22003(US)**
Inventor: **Molten, Robert**
**Route 5, Box 409M**
**Hagerstown, Maryland 21740(US)**

(74) Representative: **UEXKÜLL & STOLBERG Paten-
tanwälte**
**Beselerstrasse 4**
**W-2000 Hamburg 52(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

In the overseas (long distance) transportation of products, it has been desirable for many years- -and it is becoming increasingly desirable--to transport goods in transport containers. Transport containers conventionally are in 6m (20 feet) and 12m (40 feet) sizes, and a wide variety of goods--but by no means all types of goods--can be transported by container.

Conventionally, transport containers are loaded and unloaded using fork lifts, and like devices. Typically, about 15-30 cm (6-12 inches) clearance space must be provided at the top of the goods in the container to allow effective access by a fork lift or the like, and container loading and unloading time can be significant.

According to the present invention, an assembly and method are provided for loading and unloading overseas transport containers that decrease the amount of head space that need be provided in the container (thereby increasing the amount of space for receipt of goods), enhance the variety of goods that can be effectively transported by container, can provide effective loading and unloading of the container (requiring only one operator) in approximately one minute, and accomplish these advantageous results in a simple, effective, and relatively inexpensive manner, the assembly structure utilizible for loading and unloading being less expensive than present conventional equipment.

US-A-3,958,701 discloses an assembly for moving a heavy load out of or into an overseas transport container comprising rollers for the actual active loading or unloading a container, and some other structure is necessary in order to bring the load to the cargo holder of channel steel that is mounted right in front of the container. It does not provide a hand truck with a handle, but merely provides a motor for powering the wheels. The device is totally impractical for moving cargo where any deviation from a straight line is necessary.

It is an object of the invention to provide for an assembly and a method for loading and unloading a heavy load into and out of an overseas transport container that allows the cargo to be moved almost at will to deviate from a straight line in order to properly align the cargo.

The invention relates to an assembly for moving a heavy load out of or into an overseas transport container, comprising:

first and second substantially identical fingers of relatively rigid material, each having first and second ends, the height of said fingers being such that they may be inserted underneath a pallet to effect lifting of the pallet;

at least one inflatable load bar extending along the length of the top of each of said finger;

a structural cross-member holding said first and second fingers together at said first ends thereof, so that they are spaced laterally from each other and extend substantially parallel to each other from said structural cross-member;

means for supplying air under pressure to said load bars, said means mounted in operative association with said structural cross-member; and

a powered hand truck mounted to said structural cross-member having a handle and a driven wheel steered by said handle for effecting horizontal movement of the assembly;

a plurality of air bearings disposed along the length of the bottom of each of said fingers, and each air bearing operatively connected to a source of air under pressure associated with its respective finger; and

a manifold for supplying air under pressure to both said fingers for inflating the air bearings of said fingers simultaneaously.

The above object is also achieved by a method of loading or unloading an overseas transport container about 6m (20 feet) long with goods mounted on a pallet, the pallet with goods completely effectively filling the container, utilizing an assembly for moving heavy load as recited in any of claims 1 to 5, said method
comprising the steps of: (a) inflating the air bearings; (b) moving fingers underneath the pallet by manipulating the handle of the hand truck; (c) inflating the load bars to lift the pallet off of a horizontal surface on which it is resting; (d) moving the pallet linearly into, or out of, a transport container with the pallet vertically supported only by the air inflating the bladders and load bars; (e) deflating the load bars; and (f) removing the fingers, at the same time, from underneath the pallet; characterized in that steps (a) and (f) are practiced by moving the fingers simultaneously and together beneath the pallet and out from the pallet.

When a 40 foot container is to be loaded or unloaded instead of a 20 foot container, third and fourth fingers are connected up to the first and second fingers, and then steps (a) through (f) are practiced as set forth above. In order to provide a non-porous smooth surface to facilitate movement of the assembly, one can spread 4 mil plastic over the container floor, over a sheet metal bridge in the transition area between the container and loading dock, or like areas which the assembly will traverse. Also, the assembly (with mounted pallet(s) and goods) can be moved laterally utilizing the steerable wheel of the hand truck.

Since sometimes the loading dock, or other deck surface which the fingers traverse during the loading and/or unloading operation, is rough and uneven, it is desirable to place sheet material, such as flexible plastic sheet material, over the deck surface in order to smooth out the unevenness and facilitate the movement of the air bearings thereover. Thus, according to the present invention there also is provided an automated system and method are provided for disposing sheet material over the deck surface to be traversed during loading and unloading of containers, so as to make such loading and unloading as trouble free as possible. While the invention is particularly described with respect to assemblies and methods for loading and unloading transport containers, the invention also has applicability to other situations in which it is desirable to dispense, and then retract, flexible sheet material.

An assembly according to the invention includes at least one finger having a plurality of air bearings disposed along the bottom thereof, the air bearings connected to a source of air under pressure associated with the finger. The height of the finger is such that it may be inserted underneath a pallet to effect lifting of the pallet. A coiled supply of sheet material capable of providing a smooth surface for the air bearings is preferably mounted on a front end of the finger. Means are provided for supplying a constant tension to the supply of sheet material, preferably an air driven motor mounted to the front end of the finger and connected to it by gears or the like for applying a tension of about 10 lbs. per square inch to the sheet material. An engaging means for engaging a free end of the sheet material is preferably mounted at a predetermined point along the deck surface. In this way the supply of sheet material and sheet material engaging means are mounted so that as the finger moves over the deck surface the engaging means automatically engages the free end of the sheet material and holds it stationary with respect to the deck while the sheet is dispensed underneath the finger and provides a smooth surface over which the air bearings move. The sheet material engaging means may comprise a hook or a magnet mounted in a recess in the deck surface, and the free end of the sheet material may contain a metal bar around which the sheet material is wrapped.

A method of facilitating movement of a load over a deck surface is also provided, utilizing at least one finger having air bearings disposed along the bottom thereof, and plastic sheet material adapted to be disposed on the deck surface below the air bearings so as to smooth the deck surface and facilitate movement of the air bearings, and load carried thereby, thereover, the method comprising the steps of: (a) Automatically dispensing the sheet material so that as the finger moves over the deck surface the sheet material will be provided between the air bearings and the deck surface over a significant portion of the length of travel thereof. And, (b) automatically taking up the sheet material as the finger moves in a reverse direction with respect to the deck. Preferably steps (a) and (b) are practiced by: mounting a coil of sheet material to a front end of the finger; applying a constant tension to the sheet material; and engaging a free end of the sheet material to hold it stationary with respect to the deck while the finger moves over the deck.

In general, apparatus for the automatic dispensing of sheet material is provided comprising: A frame. A shaft mounted for rotation with respect to the frame, the shaft having sheet material coiled therearound, the sheet material including a free end having an engageable means associated therewith. Means mounted on the frame for supplying a force to the shaft so that constant tension is applied to the sheet material as it is dispensed from the shaft; and means for engaging the engageable means at the free end of the sheet material and to hold the free end stationary while the frame moves with respect to the engaging means, so that the sheet material is dispensed below the frame.

It is the primary object of the present invention to provide a simple, effective, and

FIGURE 1 is a top view, with portions cut away for clarity of illustration, of an exemplary assembly according to the invention utilizing first through fourth fingers;

FIGURE 2 is a side view of the assembly of FIGURE 1;

FIGURE 3 is a perspective exploded view of a portion of the assembly of FIGURE 1, illustrating the interconnection between the structural cross-member/manifold and first finger;

FIGURE 4 is a top perspective, exploded view illustrating the interconnection between the first and third fingers of the assembly of FIGURE 1;

FIGURE 5 is a top and perspective view of the third finger of the assembly of FIGURE 1;

FIGURE 6 is a top perspective view of the exemplary, fluidic components and controls for the supply of air under pressure to the load bars and air bearings of the assembly in FIGURE 1;

FIGURE 7 is a fluidic circuit schematic of the apparatus in FIGURE 6;

FIGURE 8 is a side partial cross-sectional view of a portion of the first finger, illustrating the manner of interconnection of a load bar with an air hose;

FIGURE 9 is a perspective schematic view, with portions cut away for clarity, illustrating a transport container being loaded according to the invention;

FIGURE 10 is a top view, with portions cut away for clarity of illustration, of an exemplary assembly according to the invention;

FIGURE 11 is a side view of the assembly of FIGURE 10;

FIGURE 12 is an end view of an exemplary sheet dispensing apparatus according to the invention;

FIGURE 13 is a side view of the apparatus of FIGURE 12;

FIGURE 14 is a top perspective schematic view illustrating a potential end configuration of the sheet material associated with the apparatus of FIGURES 12 and 13;

FIGURE 15 is a side schematic view illustrating a manner of dispensing of sheet material according to the invention; and

FIGURE 16 is a side schematic view of an alternative form of apparatus to that illustrated in FIGURE 15.

An exemplary assembly 10 according to the present invention includes at least first and second fingers 11, 12, and when utilized for loading or unloading a 12m (40 foot) container, third and fourth fingers 13, 14 are provided. The fingers preferably are constructed of a relatively rigid material, such as steel. Each finger has first and second ends; the first and second fingers 11, 12 have first ends 15, 16 and second ends 17, 18, respectively, while the third and fourth fingers 13, 14, have first ends 19, 20, and second ends 21, 22, respectively. Each of the fingers 11-14 has a plurality of air bearings 24 on the bottom thereof.

Preferably seven conventional air bearings 24 are provided associated with each finger, each finger being between about 5.7 and 6m (19 and 20 feet) long. The air bearings may be obtained commercially from Air Float Corporation of Decatur, Illinois, or others. Each bearing has a lift capability of about 3628 kg (8,000 pounds). Air under pressure is supplied to the bearings at about 1,1 bar (16 psi) and discharged at about 0,273 bar (4 psi) (a low pressure system) and the air flow is typically about 0,266 m$^3$/s (16 cubic feet per minute) per bearing (although it can be as low as 0,133 m$^3$/s (8 ft. $^3$/min.) per bearing and still function). If desired, check valves may be incorporated in the bearings in order to provide greater stability for maneuverability and shifting loads.

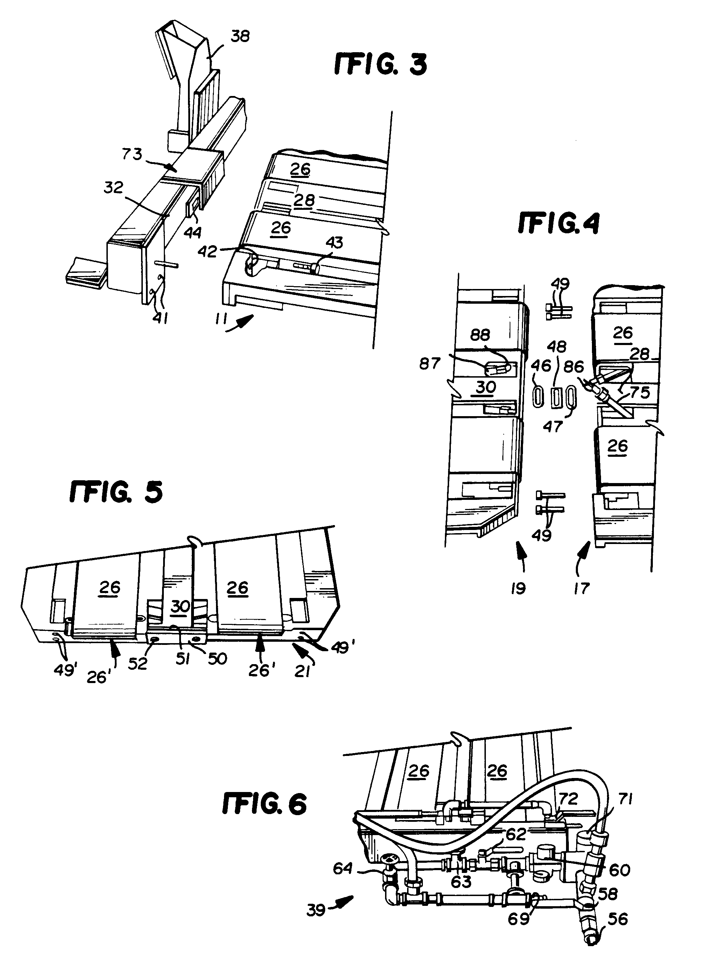

Each finger 11-14 also has associated therewith, on the top surface thereof, at least one load bar, and preferably a pair of inflatable load bars 26. The load bars are of inflatable, wear-resistant material. The free ends of the load bars 26 are inserted into slots in the vertical faces of the fingers 11-14, as illustrated at 26' in FIGURE 5.

A central tubular portion is provided for each of the fingers 11-14 to supply air through the fingers to the air bladders 24. The supply of air to the bearings may be provided by perforations (not shown) in the bottom of the central tubular portions communicating with each of the bearings using a conventional short pipe nipple (not shown) for each bladder. The central tubular portions for the fingers 11-14 are illustrated by reference numerals 28, 29, 30, and 31, respectively. A combined metal structural cross-member and manifold 33 is connected to the first ends 15, 16 of the fingers 11, 12.

Operatively connected to the structural manifold element 33 is a commercially available powered hand truck (also known as a tractor) 34. Preferably the hand truck 34 includes an inflatable bladder 35, which is utilized to facilitate transfer of some of the load from the fingers 11, 12 to the hand truck; a handle 36 which includes controls for the hand truck thereon; and a steerable wheel 37. A support 38 rigidly attached to the member 33 connects the element 33 to the hand truck 34, as does a link 38'.

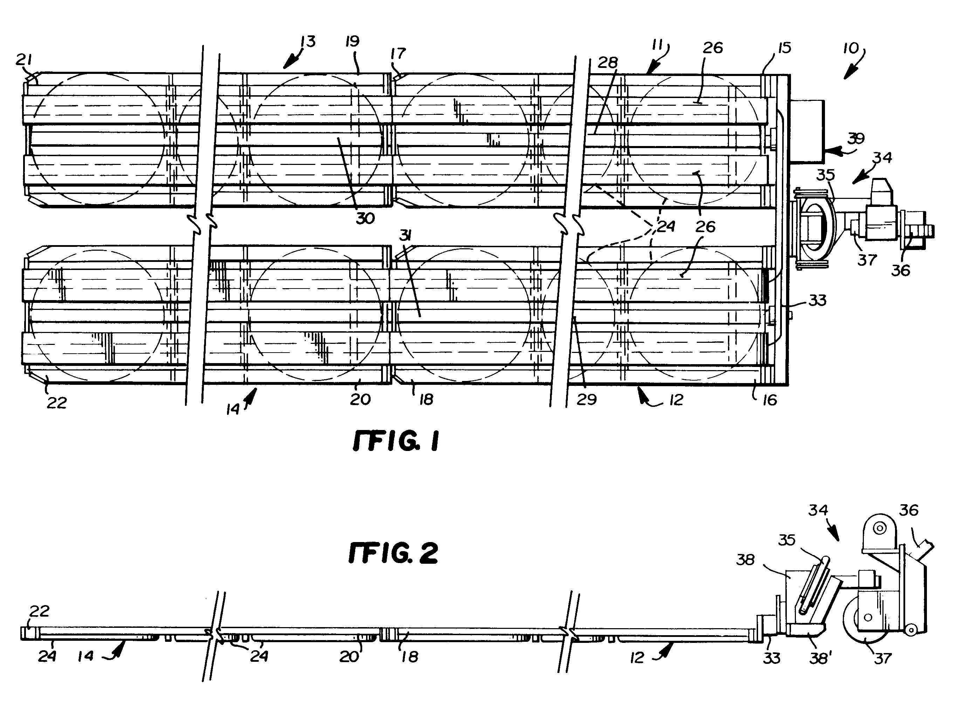

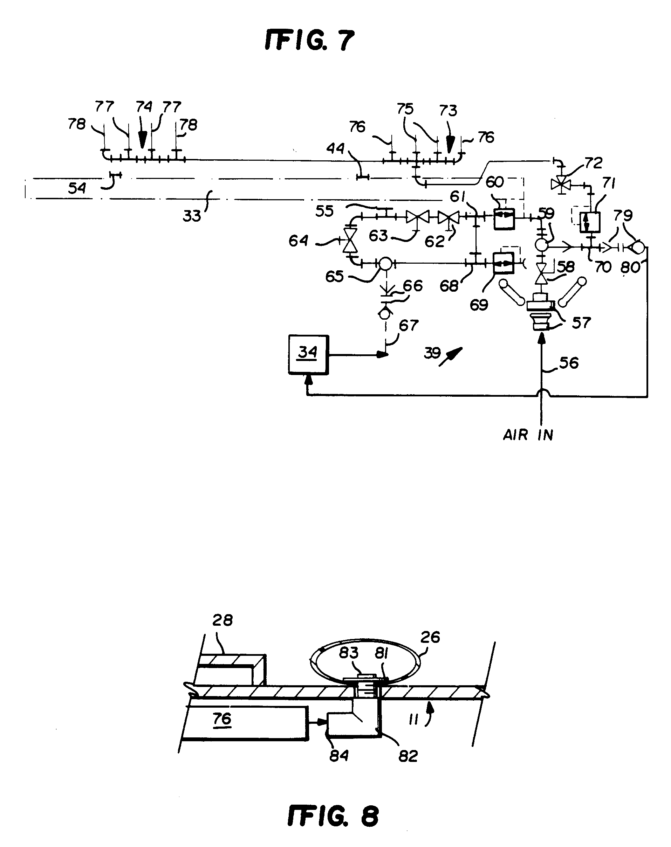

Also mounted on the element 33 are means for supplying air under pressure to the load bars 26, such means being schematically represented by reference numeral 39 in FIGURE 1, and shown in detail in FIGURES 6 and 7.

One exemplary manner in which each of the fingers 11, 12 may be interconnected to the element 33 is illustrated schematically in FIGURE 3 (for the element 11). A flange 41, having a pair of bolt receiving openings therein, extends downwardly from the end of the element 33, and cooperates with a portion 42 of the finger 11, the portion 42 also having a pair of openings therein for receipt of bolts 43 or like fasteners. Another set of flanges and fasteners is provided on the opposite side of the first end 15 of the finger 11. When the finger 11 is connected to the element 33, the air port 44 associated with the element 33 supplies air to the interior of the tubular element 28.

FIGURE 4 illustrates an exemplary interconnection between aligned fingers, in this case between the first and third fingers 11, 13. The central tubular air passageways 28, 30 are interconnected in airtight relationship utilizing resilient material gaskets 46, 47 (e g., of rubber), and metal (e.g., steel) ring 48. Gaskets 46, 47 have the same approximate circumferential configuration as the tubular passageways of the portions 30, 28, respectively, and engage the portions 30, 20, surrounding the hollow passageways therein. The metal ring 48 is sandwiched between the gaskets 46, 47. The fingers 11, 13 are held together by the sets of bolts 49 illustrated in FIGURE 4 at opposite sides thereof, the bolts 49 cooperating with openings (not shown) in the portions 49' of the fingers 11, 13.

FIGURE 5 illustrates an end termination of the fingers 13, 14, in particular, the end termination of the finger 13 being illustrated. A plate 50 having the same approximate configuration as the circumference of the tubular passageway of the portion 30 fits over and blocks the passageway in the portion 30 with a gasket 51 between the plate and the finger 13. Bolts 52 or the like hold the plate 50 in place on the element 13.

FIGURES 6 and 7 illustrate the various structures utilized to supply air to both the manifold 33 (ultimately supplied to the tubular portions 28-31 of the fingers 11-14, respectively), and also for supplying air to the load bars 26 for each of the fingers. The air-ports 44, 54 in the manifold 33 supply air from the interior of the manifold 33 to the finger tubular portions 28, 29, respectively, a T-connection 55 supplying air to the manifold 33.

The following elements supply the air to the bearings 24 associated with the fingers 11-13: The line (hose) 56 is connected to a source of compressed air at about 6,89 bar (100 psi) at the loading dock. Preferably quick connect/disconnect couplings 57 are provided for connection of the air hose 56 to the structure 39. Air passes through coupling 57 to the main on/off valve 58, which is preferably a hand operated ball valve. The air then passes through T-connection 59 to pressure regulator 60 for the air bearings (providing about a 1,1 bar (16 psi) maximum). The regulator 60 is connected to T-connection 61 which in turn is connected to the load on/off 31,75 mm (1 1/4 inch) hand operated ball valve 62, which in turn is connected to the adjustable load flow hand operated gate valve 63, and then to the connection 55. Also connected to connection 55 is the one inch hand operated globe valve 64, T-connection 65, quick connect/disconnect couplings 66, and line 67 which is the exhaust air line from the tractor 34. The other connection of the T-connection 65 is connected up to T-connection 68 and to relief valve 69 (preferably set at 20 psi maximum).

Air is also supplied from hose 56 to the load bars 26. Connector 59 is also connected to T-connection 70, which in turn is connected to regulator 71, hand-operated 3-way valve 72, and manifolds 73, 74. Extending from manifolds 73, 74 are hoses 75-78, the hoses 76 are connected to the load bars for the finger 11, the hoses 75 ultimately are connected to the load bars for the finger 13, the hoses 78 are connected to the load bars for the finger 12, and the hoses 77 are ultimately connected to the load bars for the finger 14.

The T-connector 70 is also connected through quick disconnect couplings 79 to the line 80 for supplying air to the tractor 34.

FIGURE 8 illustrates the manner in which a hose is connected to a load bar 26, in this case for the first finger 11. The hose 76 passes from the manifold 73 through an opening in the finger to the bottom of the finger, as illustrated in FIGURE 8. Disposed in the interior of the load bar 26 is a nut 81 which receives the threaded end 83 of an L-shaped connector 82, the connector 82 end 84 being connected to the hose 76.

FIGURE 4 also illustrated the manner in which air is supplied to the load bars 26 associated with the third and fourth connectors, in this case for the third connector 13. The hoses 75 are provided with couplings 86 at the ends thereof, and those couplings 86 cooperate with mating couplings 88 associated with hose sections 87 mounted on the finger 13 and passing from the top to the bottom thereof (the connection of the hose sections 87 to the load bars 26 associated therewith being the same as illustrated for the hose section 76 in FIGURE 8).

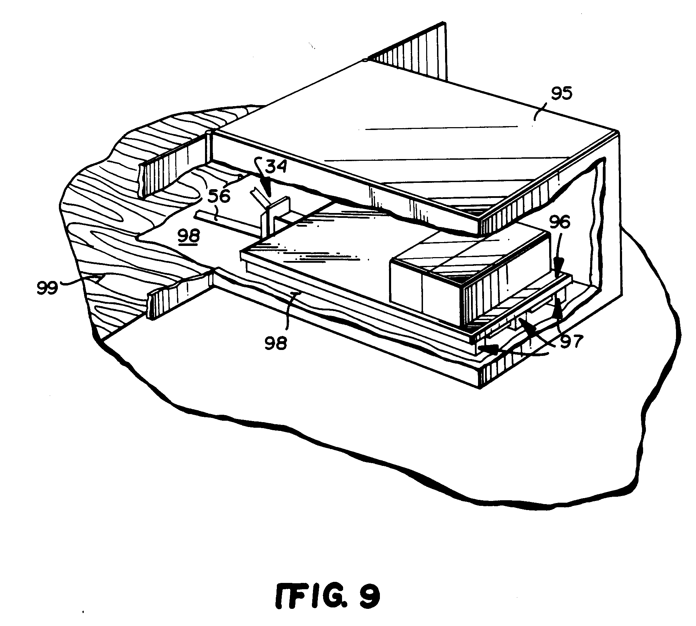

An exemplary assembly 10 according to the invention having been described, an exemplary method according to the invention, which utilizes the assembly 10, will now be described, with reference in particular to FIGURE 9. The method may comprise or consist of the recited steps, which preferably are practiced sequentially as set forth.

The air hose 56 is connected to the structure 39 by the elements 57, the main valve 58 and the load on/off valve 62 are opened, and the load flow valve 63 is adjusted to provide the desired flow to the manifold 33. Air flowing into manifold 33 and then through air ports 44, 54 thereof, passes into the tubular elements 28, 29 and inflates all of the bearings 24 associated with the fingers 11, 13. Using the hand truck 34, a single operator then moves the fingers 11, 13 simultaneously (being connected by the combined structural cross-member/manifold 33) so that they are inserted beneath the pallet 96, between the spacers 97 thereof, the pallet 96 adapted to be loaded into or unloaded from the long distance transport container 95.

In order to most easily accommodate the fingers 11, 13 (which--when the air bearings 24 are inflated--are about 4 inches high), the spacers 97 are preferably about 5 inches high.

Once the fingers 11, 13 of the assembly 10 are completely beneath the pallet 96 (which may be multiple pallets disposed end-to-end), the manually operated three-way valve 72 is operated to supply air under pressure to the manifolds 73, 74, which in turn supply air under pressure to the load bars 26 associated with the fingers 11, 13. The inflation of the load bars 26 causes the pallet 96 to be lifted off of the horizontal surface on which it is disposed. Then the hand truck 34 may be operated to move the pallet 96 into or out of the container 95. Because of a construction of the assembly 10, only 2 inches of clearance are necessary between the pallet 96 (with goods thereon) and the top of the container 95, whereas about 6 inches of clearance is necessary if the loading/unloading is done with a conventional fork lift.

In view of the provision of the steerable wheel 37 on the hand truck 34, the assembly 10 may be moved laterally, with the pallet 96 supported thereby, to facilitate direct transfer of the pallet 96 from the container 95 to a truck, train car, or the like that is at the loading dock.

Where a 40 foot container is to be loaded/unloaded instead of 20 foot container, the third and fourth fingers 13, 14 are connected up to the first and second fingers 11, 12, and the steps set forth above performed as indicated, the assembly in this case supporting the pallet (or pallets) which completely fill a container that is 40 feet long.

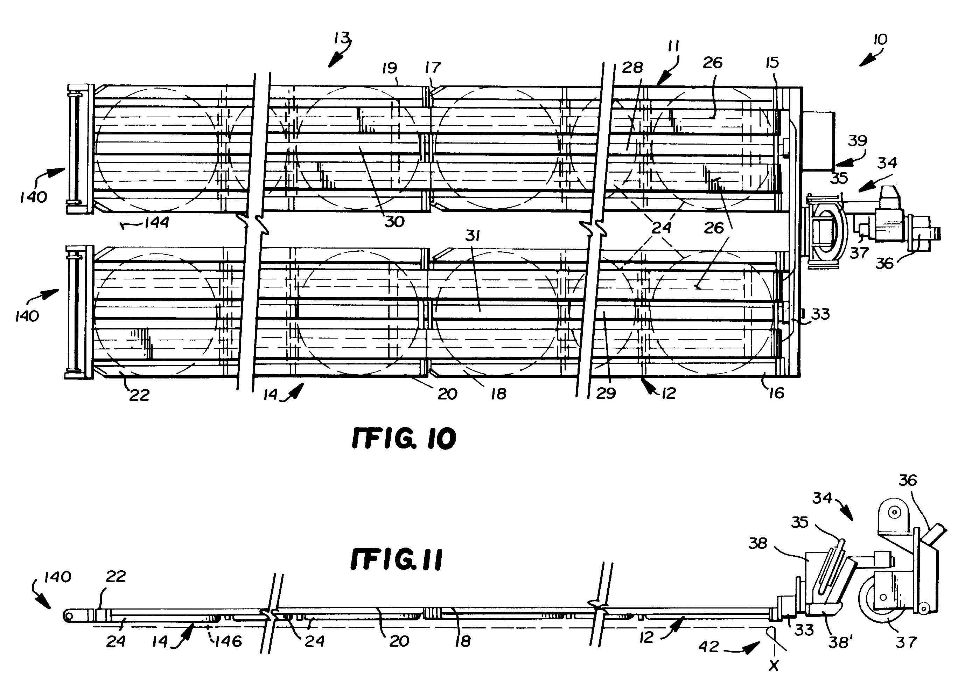

If the surface which the assembly 10 is to traverse is less even than desired, 4 mil flexible plastic sheeting 98, or the like, may be laid over a container 95 bottom, a sheet metal bridge between the container 95 and the loading dock 99, and/or other portions of the pathway to be traversed, to provide a non-porous smooth surface for the air casters to move over. This is preferably done as illustrated in FIGURES 10-16.

In FIGURES 10-16 an apparatus is provided for automatically dispensing sheet material beneath the fingers 11 through 14 so that they traverse as smooth a surface as possible during movement of a load thereby. The basic components of the apparatus for automatically dispensing sheet material are illustrated generally by reference numerals 140 and 142.

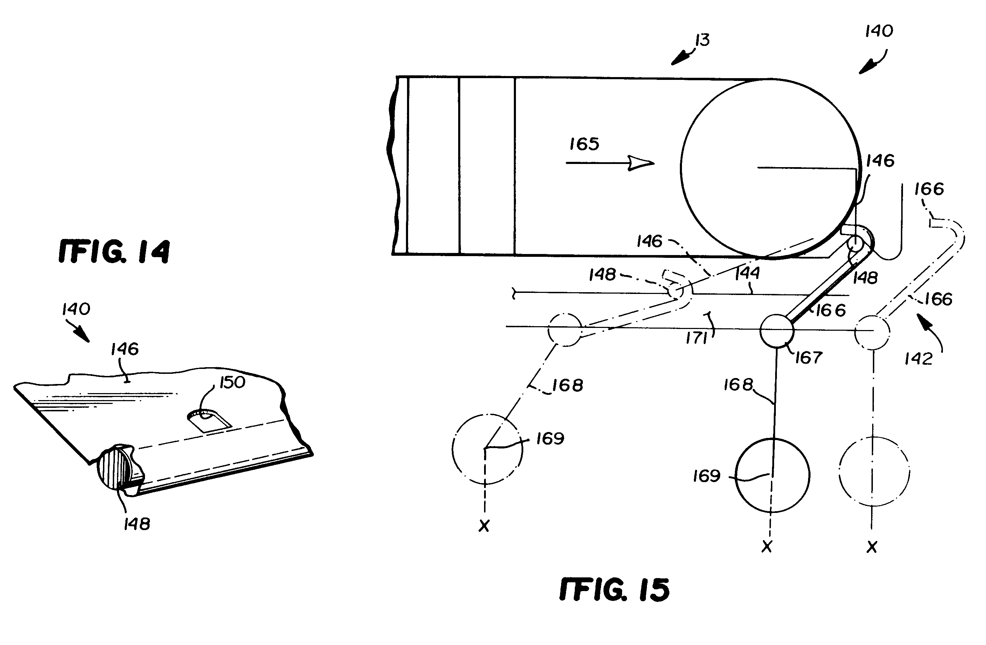

With particular reference to FIGURE 15, the apparatus 140 is desirably mounted on the end of one or more fingers (e.g. on fingers 13, 14 in FIGURES 10 and 11), for traversing a deck surface 144. Plastic sheet material 146 is coiled on the apparatus 140. One form that the free end of the plastic sheet material 146 may take is illustrated in FIGURE 14, in which the sheet material 146 is wrapped around a bar 148 and means are provided defining an opening 150 for receipt of the structure 142.

The specific type of sheet material 146 is not particularly critical. Sheeting 146 may be any sheet material which is flexible and may be readily dispensed and taken up, yet can provide a smooth surface over which the air bearings can move, and does not tear easily. One suitable sheet material is plastic, but others include rubber and metal. Reinforced plastic sheet material, such as ribbed nylon, is especially desirable.

While a metal bar 148 and a semi-circular opening 150 are illustrated in FIGURE 14, other structures can be provided for engaging the apparatus 142. For example a grommeted hole may be provided at the end of the sheet material 146

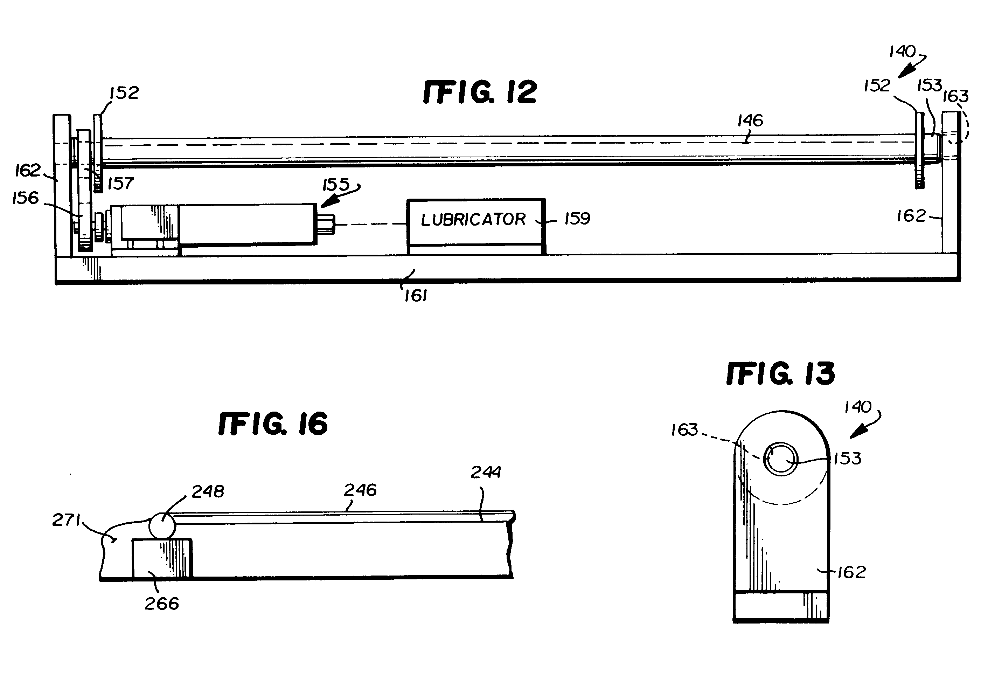

As seen most clearly in FIGURE 12, sheet material 146 preferably is disposed between flanges 152 on a shaft 153, being coiled around the shaft. A groove, such as a groove having a l/8 inch width and 1/4 inch depth, may extend along the length of the shaft 153 to receive the blind end of the sheet material 146 therein, thereby connecting it to the shaft 153. Alternate arrangements for connecting the material 146 to the shaft 153 also may be provided.

The apparatus 140 also comprises a means 155 for applying tension to the sheeting 146 as it is dispensed and taken up. As illustrated in the drawings the tension applying means 155 comprises an air driven motor which is connected by gears 156, 157 to the shaft 153. A lubricating assembly 159 may be mounted next to the motor 155. Motor 155 can be driven by the same air source as the bearings 124 or load bars 126. All of the components heretofore described preferably are mounted on a frame 161 having forward extending arm portions 162, with means defining an opening 163 in each arm 162 for receipt of the shaft 153, as seen most clearly in FIGURE 13. The shaft 153 is thus rotatable with respect to the frame 161, with a constant force being applied to the shaft 153 by the motor 155, through gears 156, 157. Typically the motor 155 would apply force to the shaft 153 so that there was a substantially constant tension of about 10 lbs. per square inch on the sheeting 146.

FIGURE 15 illustrates one particular structure 142 for engaging the free end of the sheeting 146. In this embodiment a hook 166, pivotally mounted at 167 within a recess 171 in the deck 144, is provided. As the finger 113 moves in the direction of arrow 165 in FIGURE 6, the hook 66 will pass through the opening 50 and engage the bar 48. As movement of the finger 13 continues, the hook 66 will be pivoted downwardly (leftmost position in FIGURE 6) until the bar 48 engages the deck 44, straddling the recess 71. If desired, the pivot point 167 may be mounted by a lever 168 to a shaft 149, to which spring tension or the like may be applied, to supply further tension to the sheeting 146.

An alternative configuration is illustrated in FIGURE 16 where functionally comparable structures are illustrated by the same reference numeral as in FIGURE 15 only with a "2" instead of a "1". In FIGURE 16, a permanent magnet 266 is mounted within the recess 271 in deck 244, and is adapted to operatively engage the metal bar 248 (or other magnetizable, or magnetic, material at the free end of the sheeting 246), to hold the sheeting 246 as it is dispensed beneath the fingers 13, etc

In either the FIGURES 15 or 16 situations, as the finger 13 ultimately moves back after loading, or unloading, a container (i.e. moves in a direction opposite to the direction 165 in FIGURE 15), the sheeting 146 will automatically be taken up by the motor 155 on the shaft 153, and will automatically disengage from the hook 166 or magnet 266 once its end of travel is reached.

It will be seen that where a common loading dock area is provided for loading and unloading transport containers, it is a simple matter to provide a recess 171 in the deck 144 along the desired path of movement of the fingers 11 through 14, and thus easily automatically let out and take up the sheeting 146 to provide a smooth surface covering the deck 144, over which the air bearings 124 move.

While the invention has been herein shown and described in what is presently conceived to be a practical and preferred embodiment thereof, it will be apparent that many modifications may be made within the scope of the invention. For example, in some environments it may be possible to mount the sheeting so that it is on the deck and the engaging structure is mounted on the fingers. A wide variety of other modifications are also possible, thus the invention is to be accorded the broadest interpretation of the appended claims so as encompass all equivalent structures and methods.

## Claims

1. An assembly for moving a heavy load out of or into an overseas transport container, comprising:

   first and second substantially identical fingers (11, 12) of relatively rigid material, each having first and second ends (17, 18), the height of said fingers being such that they may be inserted underneath a pallet (96) to effect lifting of the pallet;

   at least one inflatable load bar (26) extending along the length of the top of each of said finger;

   a structural cross-member (33) holding said first and second fingers together at said first ends thereof, so that they are spaced laterally from each other and extend substantially parallel to each other from said structural cross-member;

   means (39) for supplying air under pressure to said load bars, said means mounted in operative association with said structural cross-member; and

   a powered hand truck (34) mounted to said structural cross-member having a handle (36) and a driven wheel (37) steered by said handle for effecting horizontal movement of the assembly;

   a plurality of air bearings (24) disposed along the length of the bottom of each of said fingers (11, 12), and each air bearing (24) operatively connected to a source (56) of air under pressure associated with its respective finger; and

   a manifold (33) for supplying air under pressure to both said fingers (11, 12) for inflating the air bearings (24) of said fingers simultaneaously.

2. An assembly as recited in claim 1 further characterized in that said manifold (33) is a first manifold, and further characterized by a second manifold mounted on said structural cross-member, said second manifold (73, 74) comprising said means for supplying air to said load bars (26) of both said first and second fingers (11, 12).

3. An assembly as recited in claim 2 further characterized in that said second manifold (73, 74) is connected to each said load bar by means comprising a length of hose (75-78) extending from said second manifold and extending to the bottom of the finger with which the load bar is associated; and a fitting (82) extending into the interior of the load bar adjacent said first end of said finger; said fitting connected to said hose; a nut (81) inside said inflatable load bar for holding said fitting in place with respect to said load bar

4. An assembly as recited in claim 2 further characterized by a central rigid tubular portion (28, 30) of each of said fingers connected to said first manifold for supplying air from said first manifold to said bearings.

5. An assembly as recited in claim 1 further characterized by third and fourth fingers (13, 14) laterally spaced from each other substantially identical to said first and second fingers, each having a first and second end (21, 22); and means (46-49) for connecting said third and fourth fingers to said first and second fingers, respectively, so that said third finger is an airtight extension of said first finger with said first end of said third finger connected to the second end of said first finger, and said fourth finger is an air-tight extension of said second finger, with the first end of said fourth finger connected to the second end of said second finger.

6. A method of loading or unloading an overseas transport container about 6m (20 feet) long with goods mounted on a pallet, the pallet with goods completely effectively filling the container, utilizing an assembly for moving heavy load as recited in any of claims 1 to 5, said method comprising the steps of: (a) inflating the air bearings; (b) moving fingers underneath the pallet by manipulating the handle of the hand truck; (c) inflating the load bars to lift the pallet off of a horizontal surface on which it is resting; (d) moving the pallet linearly into, or out of, a transport container with the pallet vertically supported only by the air inflating the bladders and load bars; (e) deflating the load bars; and (f) removing the fingers, at the same time, from underneath the pallet; characterized in that steps (a) and (f) are practiced by moving the fingers simultaneously and together beneath the pallet and out from the pallet.

7. A method as recited in claim 6 characterized by the further step of automatically laying down a sheet of flexible sheet material (146) over the ground area to be traversed by the air bearings during the practice of steps (b) and (f) to facilitate movement therealong.

8. A method as recited in claim 6 characterized by the further steps of connecting third and fourth fingers (13, 14), substantially identical to the first and second fingers, to the first and second fingers, respectively, so that the length of each of the first and third fingers combined, and the second fourth fingers combined, is approximately 12m (40 feet); and then repeating steps (a) through (f) for a 40 foot container.

## Revendications

1. Appareil en vue du chargement ou du déchargement d'une lourde charge dans un conteneur de transport maritime, comprenant:

un premier et un second doigt (11, 12) essentiellement identiques, en un matériau relativement rigide, possédant chacun une première et une seconde extrémité (17, 18), la hauteur des dits doigts étant telle qu'ils puissent être insérés en-dessous d'une palette (96), afin de soulever la palette;

au moins une barre gonflable de chargement (26), s'étendant suivant la longueur du haut de chacun des dits doigts;

un élément structurel transversal (33) retenant ensemble le dit premier et le dit second doigt à la dite première extrémité de ces derniers, de sorte qu'ils soient latéralement écartés l'un de l'autre et s'étendent essentiellement parallèles l'un à l'autre depuis le dit élément structurel transversal:

des moyens (39) d'alimentation en air sous pression des dites barres de chargement, les dits moyens étant montés de manière à coopérer avec le dit élément structurel transversal;

un tracteur motorisé (34) conduit à la main, monté sur le dit élément structurel transversal, possédant une poignée (36) et une roue entraînée (37) orientée par la dite poignée pour effectuer le déplacement horizontal de l'appareil;

un ensemble de supports pneumatiques (24) disposés suivant la longueur de la base de chacun des dits doigts (11, 12), chaque support pneumatique étant relié à fonctionnement à une source (56) d'air sous pression associée à son doigt respectif: et

un collecteur (33) d'alimentation en air sous pression des dits doigts (11, 12), en vue de gonfler simultanément les supports pneumatiques (24) des dits doigts.

2. Appareil selon la revendication 1, **caractérisé en ce que** le dit collecteur (33) est un premier collecteur, et en outre **caractérisé par** un second collecteur monté sur le dit élément structurel transversal, le dit second collecteur (73,74) comprenant les dits moyens d'alimentation en air des dites barres de chargement (26) du dit premier et du dit second doigt (11, 12).

3. Appareil selon la revendication 2, **caractérisé en ce que** le dit second collecteur (73, 74) est relié à chacune des dites barres de chargement par des moyens comprenant une longueur de tuyau (75-78) s'étendant depuis le dit second collecteur jusqu'à la base du doigt avec lequel est associée la barre de chargement; et un raccord (82) s'étendant à l'intérieur de barre de chargement adjacente à la dite première extrémité du dit doigt; le dit raccord étant relié au dit tuyau; un écrou (81) à l'intérieur de la dite barre de chargement gonflable maintenant le dit raccord en sa position par rapport à la dite barre de chargement.

4. Appareil selon la revendication 2, **caractérisé par** une portion tubulaire centrale (28, 30) rigide de chacun des dits doigts, reliée au dit premier collecteur, en vue d'alimenter les dits supports en air provenant du dit premier collecteur.

5. Appareil selon la revendication 1, **caractérisé par** un troisième et un quatrième doigt (13, 14) écartés latéralement l'un de l'autre et en substance identiques au dit premier et au dit second doigt, chacun possédant une première et une seconde extrémité (21, 22); et des moyens (46-49) en vue de relier le dit troisième et le dit quatrième doigt respectivement au dit premier et au dit second doigt, de sorte que le dit troisième doigt soit une extension, étanche à l'air, du dit premier doigt, la dite première extrémité du dit troisième doigt étant reliée à la seconde extrémité du dit premier doigt, et le dit quatrième doigt étant une extension du dit second doigt, la première extrémité du dit quatrième doigt étant reliée à la seconde extrémité du dit second doigt.

6. Procédé de chargement et de déchargement d'un conteneur de transport maritime d'environ 6 m de long, avec des marchandises empilées sur une palette, la palette de marchandises remplissant effectivement la totalité du conteneur, le procédé recourant à un appareil en vue de déplacer de lourdes charges conforme à l'une quelconque des revendications 1 à 5, le dit procédé comprenant les étapes de: (a) gonfler les supports pneumatiques; (b) placer les doigts en-dessous de la palette en actionnant la poignée du tracteur manuel; (c) gonfler les barres de chargement pour soulever la palette d'une surface horizontale sur laquelle elle repose; (d) déplacer la palette en ligne droite dans ou hors d'un conteneur de transport, la palette n'étant supportée dans la direction verticale que par l'air gonflant les sacs et les barres de chargement; (e) dégonfler les barres de chargement; et (f) retirer simultanément les doigts de dessous la palette, **caractérisé en ce que** les étapes (a) et (f) sont effectuées en déplacant les doigts simultanément et ensemble sous la palette et hors de la palette.

7. Procédé selon la revendication 6, **caractérisé par** une étape supplémentaire d'étendre automatiquement une feuille de matériau souple de feuille (146) au-dessus de la surface de sol qui sera traversée par les supports pneumatiques au cours de l'opération des étapes (b) et (f), en vue d'en faciliter le déplacement le long de cette surface.

8. Procédé selon la revendication 6, **caractérisé par** les étapes supplémentaires de relier le troisième et le quatrième doigt (13, 14), essentiellement identiques au premier et au second doigt, respectivement au premier et au second doigt, de sorte que la longueur du premier et du troisième doigt assemblés, et du second et et du quatrième doigt assemblés soit approximativement de 12 m, et de répéter alors les étapes (a) à (f) pour un conteneur de 12 m.

**Patentansprüche**

1. Anordnung für die Bewegung einer schweren Last aus einem Übersee-Container oder in einen solchen hinein, **gekennzeichnet durch** einen ersten und einen zweiten, im wesentlichen identischen Finger (11;12) aus verhältnismäßig steifem Material, wobei diese ein erstes und ein zweites Ende (17;18) haben und die Höhe der Finger so dimensioniert ist, daß sie unter eine Palette (96) schiebbar sind, um das Anheben der Palette zu ermöglichen; mindestens einen aufblasbaren Lastträger (26), der sich entlang der Länge der Oberseite jedes der Finger erstreckt; ein strukturelles Querelement (33), das den ersten und den zweiten Finger an ihrem ersten Ende so verbindet, daß diese in einem seitlichen Abtand angeordnet sind und sich im wesentlichen parallel zueinander von dem Querelement erstrecken; Mittel (39), um den Lastträgern Druckluft zuzuführen, wobei diese Mittel mit dem Querelement verbunden sind; einen am Querträger angeordneten Handwagen mit Kraftantrieb (34), welcher einen Handgriff (36) und ein angetriebenes Rad (37) hat, das durch den Handgriff steuerbar ist, um eine Horizontalbewegung der Anordnung zu bewirken; eine Vielzahl von Luftlagern (24), die entlang der Unterseite jedes der Finger (11;12) angeordnet sind, wobei jedes der Luftlager (24) funktionsmäßig mit einer Luftquelle (56) verbunden ist, die ihrem entsprechenden Finger zugeordnet ist; einen Verteiler (33) für die Zuführung von Druckluft zu den beiden Fingern (11;12), um die Luftlager (24) der Finger gleichzeitig aufzublasen.

2. Anordnung nach Anspruch 1, **dadurch gekennzeichnet,** daß der Verteiler (33) ein erster Verteiler ist und daß ein zweiter Verteiler an dem strukturellen Querelement angeordnet ist, wobei der zweite Verteiler (73,74) die Mittel einschließt, um Luft den Lastträgern (26) der beiden Finger (11,12) zuzuführen.

3. Anordnung nach Anspruch 2, **dadurch gekennzeichnet,** daß der zweite Verteiler (73;74) mit jedem der Lastträger durch Mittel verbunden ist, welche umfassen: Schläuche (75 bis 78), die sich vom zweiten Verteiler aus bis zur Unterseite des Fingers erstrecken, mit welchem der Lastträger in Verbindung steht; eine Armatur (82), die sich in das Innere des Lastträgers angrenzend an das erste Ende des entsprechenden Fingers erstreckt, wobei die Armatur mit dem Schlauch verbunden ist; eine Mutter (81) im Innern des aufblasbaren Lastträgers, um die Armatur in bezug auf den Lastträger zu fixieren.

**4.** Anordnung nach Anspruch 2, **dadurch gekennzeichnet,** daß jeder der Finger einen in der Mitte liegenden starren röhrenförmigen Teil (28;30) aufweist, der mit dem ersten Verteiler für die Zuführung von Luft von dem ersten Verteiler zu den Trägern verbunden ist.

**5.** Anordnung nach Anspruch 1, **dadurch gekennzeichnet,** daß dritte und vierte Finger (13;14) vorgesehen sind, die in seitlichem Abstand voneinander angeordnet sind und im wesentlichen identisch mit dem ersten und dem zweiten Finger sind, wobei jeder über ein erstes und ein zweites Ende (21;22) verfügt und Mittel (46 bis 49) für das Verbinden des dritten und vierten Fingers derart aufweist, daß der dritte Finger eine luftdichte Verlängerung des ersten Fingers ist, wobei das erste Ende des dritten Fingers mit dem zweiten Ende des ersten Fingers verbunden ist und daß der vierte Finger eine luftdichte Verlängerung des zweiten Fingers ist, wobei das erste Ende des vierten Fingers mit dem zweiten Ende des zweiten Fingers verbunden ist.

**6.** Verfahren zum Be- oder Entladen eines Übersee-Transport-containers mit einer Länge von etwa 6 Metern (20 Fuß) mit Waren, mit denen eine Palette beladen ist, die den Container völlig effektiv füllt, wobei eine Anordnung für die Bewegung einer schweren Last genutzt wird, die in einem der Ansprüche 1 bis 5 aufgeführt ist und das Verfahren folgende Schritte umfaßt:

a) das Aufblasen der Luftlager;
b) das Verschieben der Finger unter die Palette durch Manipulieran des Handgriffs des Handwagens;
c) das Aufblasen der Lastträger, um die Palette von der horizontalen Fläche auf der sie ruht abzuheben;
d) das Verschieben der Palette linear in einem Container hinein oder aus einem solchen heraus, wobei die Palette vertikal nur durch die Luft getragen wird, die den Luftlagern und den Lastträgern zugeleitet wird;
e) das Entlüften der Lastträger;
f) gleichzeitig das Entfernen der Finger aus ihrer Stellung unter der Palette, **dadurch gekennzeichnet,** daß die Schritte a) und f) dadurch praktiziert werden, daß die Finger gleichzeitig und zusammen aus ihrer Stellung unter die Palette bzw. aus der Palette heraus bewegt werden.

**7.** Verfahren nach Anspruch 6**, dadurch gekennzeichnet,** daß ein zusätzlicher Schritt ein automatisches Ablegen eines Blattes aus flexiblem Blattmaterial (146) auf die Bodenfläche vorsieht, die durch die Luftträger während der Schritte b) und f) überquert wird, um eine Verschiebung darauf zu erleichtern.

**8.** Verfahren nach Anspruch 6, **dadurch gekennzeichnet,** daß weitere Schritte das Verbinden des dritten und vierten Fingers (13;14), die im wesentlichen mit dem ersten und zweiten Finger identisch sind, derart vorsehen, daß die Länge jedes ersten und dritten Fingers kombiniert und des zweiten und vierten Fingers kombiniert etwa 12 Meter (40 Fuß) beträgt und dann die Schritte a) bis f) für einen 40-Fuß-Container wiederholen.

FIG.1

FIG.2

**FIG. 3**

38

73

32

44

42

43

26

28

26

41

11

**FIG. 4**

49

88

87

48

46   86

30

26

28

75

47

26

19   17

49

**FIG. 5**

26

30

26

49'   26'   52   51   50   26'   21   49'

**FIG. 6**

26   26

72   71

62

64

63

60

39   69   58   56

# ΓFIG. 7

AIR IN

# ΓFIG. 8

**IFIG. 9**

**FIG. 10**

**FIG. 11**

EP 0 288 914 B1

**FIG. 12**

LUBRICATOR

**FIG. 16**

**FIG. 13**

IFIG. 14

IFIG. 15

EP 0 288 914 B1